# EUROPEAN PATENT APPLICATION

(11) **EP 4 753 248 A1**
(43) Date of publication of application: **03.06.2026**
(21) Application number: 25218324.9
(22) Date of filing: 25.11.2025
(51) Int. Cl.: H04N 1/00, H04N 1/32

(54) **IMAGE PROCESSING APPARATUS CONTROL METHOD AND IMAGE PROCESSING APPARATUS**

(30) Priority: 29.11.2024 JP 2024208223
(71) Applicant: KYOCERA Document Solutions Inc., Osaka-shi, Osaka 540-8585 (JP)
(72) Inventor: Takai, Kenji, Osaka-shi, 540-8585 (JP); Nakagawa, Hiroshi, Osaka-shi, 540-8585 (JP)
(74) Representative: Plougmann Vingtoft a/s

(57) **Abstract**

A control apparatus (5) executes first control when a first abnormal state in which an abnormality is sensed in the middle of execution of a consecutive image acquisition process of a consecutive reading job with a first operation mode selected occurs. The control apparatus (5) executes second control when a second abnormal state in which the abnormality is sensed in the middle of execution of the consecutive image acquisition process of the consecutive reading job with a second operation mode selected occurs. The first control includes causing, by the control apparatus (5), an image processing apparatus (10) to suspend the consecutive image acquisition process. The second control includes causing, by the control apparatus (5), the image processing apparatus (10) to continue the consecutive image acquisition process of the consecutive reading job to an end.

## Description

### INCORPORATION BY REFERENCE

This application is based upon and claims the benefit of priority from the corresponding Japanese Patent Application No. 2024-208223 filed on November 29, 2024, the entire contents of which are incorporated herein by reference.

### BACKGROUND

This disclosure relates to an image processing apparatus control method and an image processing apparatus in a case where a process of reading images by an image sensor unit from a plurality of sequentially conveyed document sheets is executed.

An image processing apparatus such as a copying machine, a facsimile apparatus, or a multifunction peripheral includes an image reading apparatus including a document sheet conveying device and an image sensor unit in some cases.

The document sheet conveying device is capable of executing a consecutive conveyance process of sequentially conveying a plurality of document sheets along a conveyance path. The image sensor unit is capable of executing a consecutive reading process of sequentially reading images on the plurality of respective document sheets conveyed through the consecutive conveyance process.

The image processing apparatus is capable of executing a consecutive reading job in response to a request to execute a job. The consecutive reading job includes a consecutive image acquisition process and a data output process subsequent to the consecutive image acquisition process. The consecutive image acquisition process includes the consecutive conveyance process and the consecutive reading process. The data output process is a process of transmitting the pieces of data of readout images to a designated destination, a process of preserving the pieces of data of readout images in a storage apparatus, or the like.

In addition, it has been known that the image reading apparatus includes an ultrasonic sensor which senses the multi-feeding of document sheets (see, for example, Patent Document 1). For example, when the multi-feeding is sensed, the image reading apparatus stops the conveyance of the document sheets in a case where the multi-feed length is short, and continues the conveyance of the document sheets in a case where the multi-feed length is long.

### SUMMARY

An image processing apparatus control method according to an aspect of this disclosure is a method for controlling an image processing apparatus. The image processing apparatus includes a document sheet conveying device, an image sensor unit, an abnormality sensing device, and a data processing apparatus. The document sheet conveying device executes a consecutive conveyance process of sequentially conveying a plurality of document sheets along a conveyance path. The image sensor unit executes a consecutive reading process of sequentially reading images on the plurality of respective document sheets conveyed through the consecutive conveyance process. The abnormality sensing device senses an abnormality in one or both of document sheet conveyance and a readout image read from each of the plurality of document sheets whenever the plurality of document sheets is each conveyed. The data processing apparatus executes a data output process based on a plurality of pieces of page image data indicating the respective readout images acquired through the consecutive conveyance process and the consecutive reading process. The image processing apparatus control method includes selecting, by a control apparatus, one of a plurality of candidate modes in accordance with a selection input made through an information input device included in a specific apparatus that is the image processing apparatus or a host apparatus communicable with the image processing apparatus. The plurality of candidate modes includes a first operation mode and a second operation mode. Furthermore, the image processing apparatus control method includes causing, by the control apparatus, the image processing apparatus to execute a consecutive reading job in response to a request to execute a job. The consecutive reading job includes a consecutive image acquisition process and the data output process subsequent to the consecutive image acquisition process. The consecutive image acquisition process includes the consecutive conveyance process and the consecutive reading process. Furthermore, the image processing apparatus control method includes executing, by the control apparatus, first control when a first abnormal state in which the abnormality is sensed in the middle of execution of the consecutive image acquisition process of the consecutive reading job with the first operation mode selected occurs. Furthermore, the image processing apparatus control method includes executing, by the control apparatus, second control when a second abnormal state in which the abnormality is sensed in the middle of execution of the consecutive image acquisition process of the consecutive reading job with the second operation mode selected occurs. The first control includes causing, by the control apparatus, the image processing apparatus to suspend the consecutive image acquisition process. Furthermore, the first control includes causing, by the control apparatus, a display device included in the specific apparatus to display information about the abnormality and first inquiry information for inquiring one instruction of a plurality of candidates including continuation of the consecutive reading job and cancellation of the consecutive reading job. Furthermore, the first control includes causing, by the control apparatus, the image processing apparatus to execute a process compliant with an instruction of a first response to the first inquiry information. The first response is input through the information input device. The second control includes causing, by the control apparatus, the image processing apparatus to continue the consecutive image acquisition process of the consecutive reading job to an end. Furthermore, the image processing apparatus control method includes causing, by the control apparatus, the display device to display the information about the abnormality and second inquiry information when the consecutive image acquisition process of the consecutive reading job comes to an end. The second inquiry information is for inquiring one instruction of the plurality of candidates including the continuation of the consecutive reading job and the cancellation of the consecutive reading job. Furthermore, the image processing apparatus control method includes causing, by the control apparatus, the image processing apparatus to execute a process compliant with an instruction of a second response to the second inquiry information. The second response is input through the information input device.

An image processing apparatus according to another aspect of this disclosure includes the document sheet conveying device, the image sensor unit, the abnormality sensing device, the data processing apparatus, and the control apparatus that achieves the image processing apparatus control method.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a block diagram showing a configuration of an image processing apparatus according to a first embodiment.
FIG. 2 is a configuration diagram of an image reading apparatus in the image processing apparatus according to the first embodiment.
FIG. 3 is a flowchart showing an example of a procedure of a mode selection process in the image processing apparatus according to the first embodiment.
FIG. 4 is a flowchart showing an example of a procedure of first job control in the image processing apparatus according to the first embodiment.
FIG. 5 is a flowchart showing an example of a procedure of a first inquiry process in the image processing apparatus according to the first embodiment.
FIG. 6 is a flowchart showing an example of a procedure of second job control in the image processing apparatus according to the first embodiment.
FIG. 7 is a flowchart showing an example of a procedure of a second inquiry process in the image processing apparatus according to the first embodiment.
FIG. 8 is a diagram showing an example of a first inquiry screen output in the image processing apparatus according to the first embodiment.
FIG. 9 is a diagram showing an example of a second inquiry screen output in the image processing apparatus according to the first embodiment.
FIG. 10 is a block diagram showing a configuration of an image processing apparatus according to a second embodiment.
FIG. 11 is a flowchart showing an example of a procedure of third job control in the image processing apparatus according to the second embodiment.

### DETAILED DESCRIPTION

Hereinafter, embodiments of this disclosure will be described with reference to the drawings. It is noted that the following embodiments are specific examples of this disclosure and do not limit the technical scope of this disclosure.

### [First Embodiment]

An image processing apparatus 10 according to a first embodiment is capable of executing various kinds of image processing such as an image reading process and an image formation process. For example, the image processing apparatus 10 is a copying machine, a facsimile apparatus, a multifunction peripheral, or the like.

### [Configuration of Image Processing Apparatus 10]

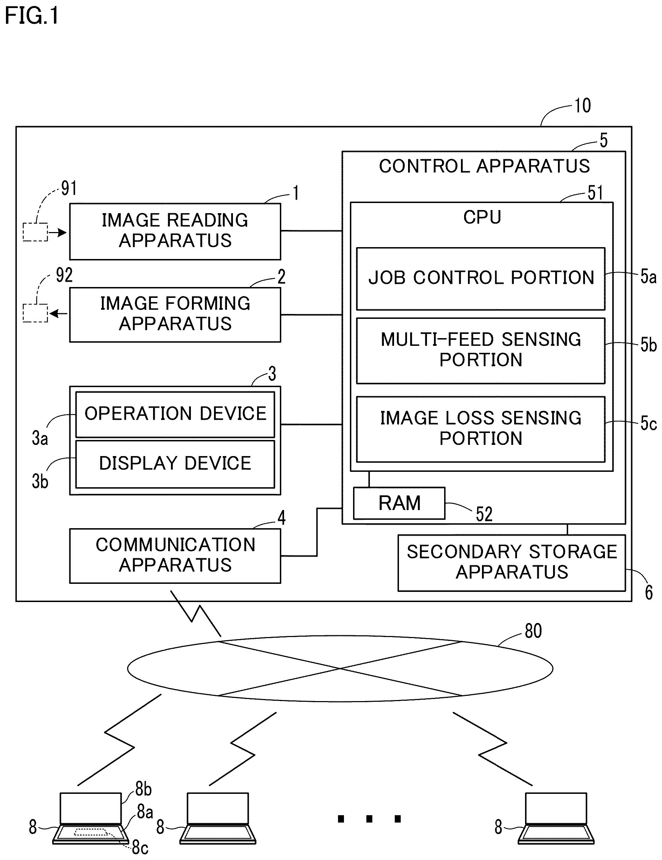

In the example shown in FIG. 1, the image processing apparatus 10 includes an image reading apparatus 1, an image forming apparatus 2, a user interface apparatus 3, a communication apparatus 4, a control apparatus 5, a secondary storage apparatus 6, and the like.

The image processing apparatus 10 is communicable with another apparatus such as a host apparatus 8 through a network 80. The network 80 includes a local area network (LAN), the Internet, and the like. The host apparatus 8 is a computer including an operation device 8a, a display device 8b, and a processing device 8c.

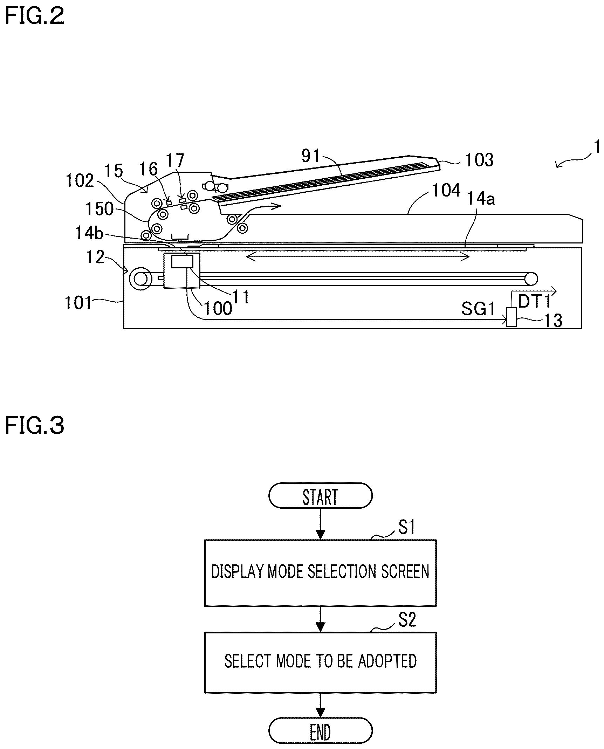

The image reading apparatus 1 executes the image reading process. The image reading process is a process of reading an image from a document sheet 91 and outputting the data of a readout image. The readout image is an image read by the image reading apparatus 1 from the document sheet 91. The configuration of the image reading apparatus 1 will be described below (see FIG. 2).

The image forming apparatus 2 executes an image formation process of forming an image on a sheet 92. The image forming apparatus 2 includes a sheet conveying mechanism that conveys the sheet 92 and a printing device that forms an image on the conveyed sheet 92. The printing device forms an image on the sheet 92 in a method defined in advance such as an electrographic method or an inkjet method.

The user interface apparatus 3 includes an operation device 3a and a display device 3b. The operation device 3a is a device that receives a human operation. For example, the operation device 3a includes an operation button, a touch panel, and the like. The display device 3b is capable of displaying information. For example, the display device 3b includes a display panel such as a liquid-crystal panel.

The operation device 3a of the image processing apparatus 10 and the operation device 8a of the host apparatus 8 are respective examples of an information input device capable of receiving information.

The communication apparatus 4 is a communication interface device that communicates with another apparatus such as the host apparatus 8 through the network 80. The control apparatus 5 transmits all data to and receives all data from the other apparatus through the communication apparatus 4.

The image forming apparatus 2 executes the image formation process based on the data of the readout image or received print data. The received print data is data included in a print request received from the host apparatus 8 through the communication apparatus 4.

The control apparatus 5 executes various operations and various kinds of data processing, and executes control over the various electrical apparatuses included in the image processing apparatus 10. The control apparatus 5 includes a CPU 51, a random access memory (RAM) 52, and the like.

The secondary storage apparatus 6 is a computer-readable non-volatile storage apparatus. The secondary storage apparatus 6 is capable of storing a computer program and various kinds of data. For example, one or both of a solid state drive (SSD) and a hard disk drive are adopted as the secondary storage apparatus 6.

The secondary storage apparatus 6 stores the computer program to be executed by the CPU 51 and data to be referred to by the CPU 51. The CPU 51 is an example of a processor.

The CPU 51 is a processor that executes the computer program stored in the secondary storage apparatus 6 to execute various kinds of data processing and various kinds of control.

Additionally, it is conceivable that another processor such as a DSP executes the data processing and the control instead of the CPU 51.

The RAM 52 is a computer-readable volatile storage device. The RAM 52 primarily stores the computer program that is executed by the CPU 51 and data that is output and referred to in the process of executing the computer program by the CPU 51.

The CPU 51 includes a plurality of processing modules that is implemented by executing the computer program. The plurality of processing modules in the CPU 51 includes a job control portion 5a, a multi-feed sensing portion 5b, an image loss sensing portion 5c, and the like.

The job control portion 5a controls the image reading apparatus 1, the image forming apparatus 2, and the communication apparatus 4. In response to a request to execute jobs, the job control portion 5a causes some or all of the image reading apparatus 1, the image forming apparatus 2, and the communication apparatus 4 to execute the jobs.

In this embodiment, the jobs include an image preservation job, an image transmission job, a copy job, and a print job.

The image preservation job includes the image reading process and a process of preserving the data of the readout image acquired through the image reading process in the secondary storage apparatus 6. The image transmission job includes the image reading process and a process of transmitting the data of the readout image acquired through the image reading process to a designated destination by the communication apparatus 4.

The copy job includes the image reading process and the print process based on the data of the readout image acquired through the image reading process. The print job is the image formation process based on the received print data.

### [Configuration of Image Reading Apparatus 1]

As shown in FIG. 2, the image reading apparatus 1 includes a body 101 and a cover 102. The cover 102 is supported by the body 101 so as to allow the upper surface of the body 101 to be opened and closed.

The body 101 includes an image sensor unit 11, a scanning unit 100, a unit driving device 12, an analog front end (AFE) 13, a platen glass 14a, a contact glass 14b, and the like. The cover 102 includes a document sheet conveying device 15, a conveyance path 150, a supply tray 103, and a discharge tray 104.

The unit driving device 12 moves the scanning unit 100 along the lower surface of the platen glass 14a and the lower surface of the contact glass 14b.

The conveyance path 150 is a path of the document sheets 91 extending from an end of the supply tray 103 to an end of the discharge tray 104 through the upper surface of the contact glass 14b.

The document sheet conveying device 15 feeds the document sheets 91 on the supply tray 103 to the conveyance path 150 and further conveys the document sheets 91 along the conveyance path 150. Furthermore, the document sheet conveying device 15 discharges the document sheets 91 from the conveyance path 150 onto the discharge tray 104.

The image sensor unit 11 reads an image from each of the document sheets 91. The image sensor unit 11 outputs an analog line image signal SG1 indicating a line image of the readout image. The AFE 13 outputs line image data DT1 by digitalizing the line image signal SG1.

The image reading apparatus 1 is capable of executing a stationary-document-sheet reading process. The stationary-document-sheet reading process is a process of reading an image on the document sheet 91 placed on the platen glass 14a by the image sensor unit 11 while moving the scanning unit 100 along the lower surface of the platen glass 14a.

Furthermore, the image reading apparatus 1 is capable of executing a conveyed-document-sheet reading process. The conveyed-document-sheet reading process is a process of reading an image on the document sheet 91 conveyed by the document sheet conveying device 15 while holding the scanning unit 100 at a reading position along the lower surface of the contact glass 14b.

The stationary-document-sheet reading process or the conveyed-document-sheet reading process is executed to offer page image data including the plurality of pieces of line image data DT1 of the document sheet 91 for one page.

In a case where the plurality of document sheets 91 is placed on the supply tray 103, the document sheet conveying device 15 executes a consecutive conveyance process of sequentially conveying the plurality of document sheets 91 along the conveyance path 150. In this case, the image sensor unit 11 executes a consecutive reading process of sequentially reading images on the plurality of respective document sheets 91 conveyed through the consecutive conveyance process.

The consecutive conveyance process and the consecutive reading process are executed to offer a plurality of pieces of page image data indicating the respective readout images.

The image reading apparatus 1 further includes a document sheet sensor 16. The document sheet sensor 16 senses each of the document sheets 91 at an upstream position in the document sheet conveying direction with respect to a position along the upper surface of the contact glass 14b in the conveyance path 150.

For example, the document sheet sensor 16 is a reflective photosensor. In addition, the document sheet sensor 16 may include a swing member that is swung by coming into contact with each of the document sheets 91 and a photointerrupter that senses the swing of the swing member.

The AFE 13 segments the plurality of pieces of line image data DT1 into each of the pieces of page image data in response to a change in a sense signal of the document sheet sensor 16.

Specifically, the AFE 13 delimits the start of each of the pieces of page image data a predefined time after the time point at which the document sheet sensor 16 senses each of the document sheets 91. Furthermore, the AFE 13 delimits the end of each of the pieces of page image data the predefined time after the time point at which the document sheet sensor 16 no longer senses any of the document sheets 91.

The following description refers to a process including together the consecutive conveyance process and the consecutive reading process that are executed in parallel as consecutive image acquisition process. In a case where the plurality of document sheets 91 is placed on the supply tray 103, the image preservation job, the image transmission job, and the copy job each include the consecutive image acquisition process.

More specifically, the image preservation job includes the consecutive image acquisition process and an image data preservation process subsequent to the consecutive reading process. The image transmission job includes the consecutive image acquisition process and an image data transmission process subsequent to the consecutive reading process. The copy job includes the consecutive image acquisition process and the print process subsequent to the consecutive image acquisition process.

The data preservation process in the image preservation job, the image data transmission process in the image transmission job, and the print process in the copy job are respective examples of a data output process that is executed subsequently to the consecutive reading process.

The data output process is a process of outputting the plurality of pieces of page image data acquired through the consecutive image acquisition process to an output destination designated in advance. The following description refers to the image preservation job, the image transmission job, and the copy job each including the consecutive image acquisition process each as consecutive reading job.

The CPU 51 that executes the data preservation process, the communication apparatus 4 that executes the image data transmission process, and the image forming apparatus 2 that executes the print process are respective examples of a data processing apparatus that executes the data output process.

The image reading apparatus 1 further includes an ultrasonic sensor 17. The ultrasonic sensor 17 emits ultrasonic waves to the respective conveyed document sheets 91 and senses the degree of attenuation of the ultrasonic waves passing through the respective document sheets 91.

The multi-feed sensing portion 5b executes a multi-feed sensing process of sensing, on the basis of sense signals of the ultrasonic sensor 17, a multi-feed abnormality that the two or more document sheets 91 are conveyed in the conveyance path 150 in an overlapped state. In the multi-feed sensing process, the multi-feed sensing portion 5b determines the occurrence of the multi-feed abnormality in a case where the sense signals of the ultrasonic sensor 17 indicate the degree of attenuation of the ultrasonic waves greater than a predefined degree.

In this embodiment, the ultrasonic sensor 17 and the multi-feed sensing portion 5b are an example of a multi-feed sensing device that senses the multi-feed abnormality. The ultrasonic sensor 17 and the multi-feed sensing portion 5b are an example of an abnormality sensing device that senses an abnormality in document sheet conveyance whenever the plurality of document sheets 91 is each conveyed.

The image loss sensing portion 5c executes an image loss sensing process of sensing an image loss abnormality that an image loss region is included in the readout image for each of the pieces of page image data. The image loss sensing portion 5c of the CPU 51 is an example of an image loss sensing device.

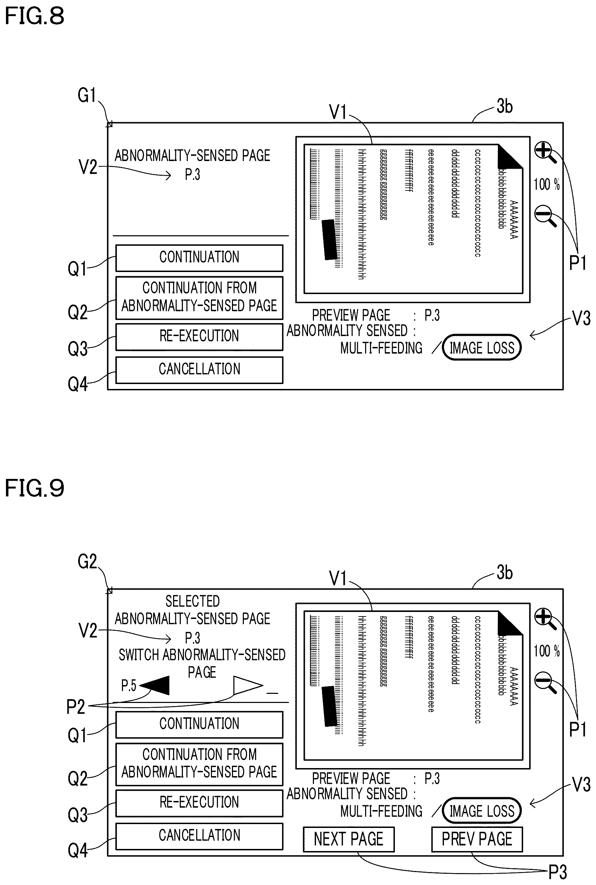

For example, the image loss region is a folded corner region of the document sheet 91, the region of a label sheet pasted to the document sheet 91, or the like (see FIGS. 8 and 9).

In this embodiment, the image loss sensing portion 5c is an artificial intelligence system for image recognition learned in advance using a plurality of pieces of sample image data. It is noted that the image loss sensing portion 5c may be a computer system which identifies the image loss region through image processing such as edge detection.

The image loss sensing portion 5c of the CPU 51 is an example of an abnormality sensing device that senses an abnormality in the readout image.

It is noted that one or both of the multi-feed sensing portion 5b and the image loss sensing portion 5c may be implemented as other processors such as digital signal processors (DSPs) or circuits such as application specific integrated circuits (ASICs).

Incidentally, in the image processing apparatus 10, the multi-feed abnormality or the image loss abnormality is sensed in some cases in the middle of the execution of the consecutive reading job. It is desirable that it be possible to designate a process to be executed when the abnormality is sensed depending on the intention of a user in such a case.

In addition, it is desirable that it be possible to check, in a case where the abnormality is sensed in the middle of the execution of the consecutive reading job, the readout image for the document sheet 91 in which the abnormality is sensed and then designate a method of the remaining processes in the consecutive reading job.

In the image processing apparatus 10, the job control portion 5a executes a mode selection process when a mode selection start request is input through the operation device 3a or the communication apparatus 4 (see FIG. 3). The mode selection process is a process of selecting an operation mode to be executed when the consecutive reading job is executed.

### [Mode Selection Process]

Hereinafter, examples of procedures of the mode selection process will be described with reference to the flowchart shown in FIG. 3.

In the following description, S1 and S2 represent the identification signs of a plurality of steps in the mode selection process. In the mode selection process, the process of step S1 is first executed.

### <Step S1>

In step S1, the job control portion 5a causes the display device 3b to display a mode selection screen defined in advance. The mode selection screen is a menu screen that requests an operation of selecting any one of a first operation mode and a second operation mode.

The first operation mode and the second operation mode are pieces of information each for designating a process to be executed when the abnormality is sensed in the middle of the consecutive reading job.

The first operation mode and the second operation mode are examples of a plurality of candidate mode selectable in the mode selection screen.

The job control portion 5a executes the process of step S2 after executing the process of step S1.

### <Step S2>

In step S2, the job control portion 5a selects one of the first operation mode and the second operation mode as an adopted mode in accordance with a selection input made through the operation device 3a.

The job control portion 5a brings the mode selection process to an end after executing the process of step S2. It is noted that one of the first operation mode and the second operation mode is set as the initial adopted mode in advance before the mode selection process is executed.

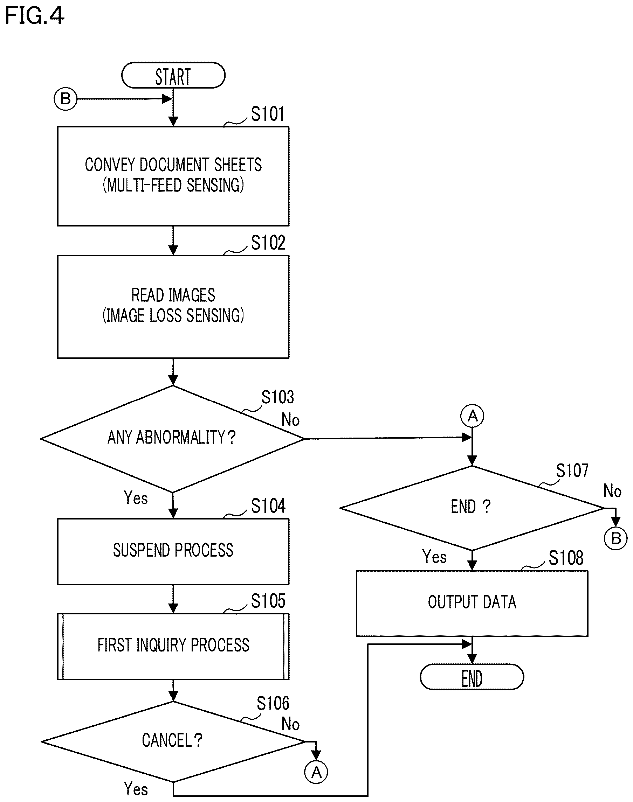

The job control portion 5a executes one of first job control and second job control described below in response to a request to execute a job (see FIGS. 4 to 7). The request is input through the operation device 3a or the operation device 8a of the host apparatus 8.

The job control portion 5a executes the first job control in response to the request to execute the job with the first operation mode selected. Meanwhile, the job control portion 5a executes the second job control in response to the request to execute the job with the second operation mode selected.

### [First Job Control]

Next, examples of procedures of the first job control will be described with reference to the flowchart shown in FIG. 4.

In the following description, S101, S102, ... represent the identification signs of a plurality of steps in the first job control. In the first job control, the process of step S101 is first executed.

### <Step S101>

In step S101, the job control portion 5a causes the document sheet conveying device 15 to execute document sheet conveyance. In step S101, the document sheets 91 are conveyed along the conveyance path 150 and the multi-feed sensing portion 5b executes the multi-feed sensing process on the basis of sense signals of the ultrasonic sensor 17.

The job control portion 5a executes the process of step S102 in parallel with the process of step S101.

### <Step S102>

In step S102, the job control portion 5a causes the image sensor unit 11 to execute the image reading process. In step S102, the pieces of page image data for the conveyed document sheets 91 are acquired and the image loss sensing portion 5c executes the image loss sensing process on each of the pieces of page image data.

As described above, in steps S101 and S102, the job control portion 5a causes the image reading apparatus 1 to execute a page image acquisition process of the consecutive image acquisition process corresponding to the one document sheet 91.

The job control portion 5a executes the process of step S103 after executing the processes of steps S101 to S102.

### <Step S103>

In step S103, the job control portion 5a selects the next process depending on whether or not the abnormality is sensed through the multi-feed sensing process and the image loss sensing process. The abnormality includes one or both of the multi-feed abnormality and the image loss abnormality.

The following description refers to the document sheet 91 in which the abnormality is sensed as abnormality-sensed document sheet.

The job control portion 5a executes the process of step S104 in a case where the abnormality is sensed. The job control portion 5a executes the process of step S107 in a case where the abnormality is not sensed.

### <Step S104>

In step S104, the job control portion 5a causes the document sheet conveying device 15 and the image sensor unit 11 to suspend the consecutive image acquisition process. The job control portion 5a executes the process of step S104 when the page image acquisition process on the abnormality-sensed document sheet comes to an end.

The job control portion 5a executes the process of step S105 after executing the process of step S104.

### <Step S105>

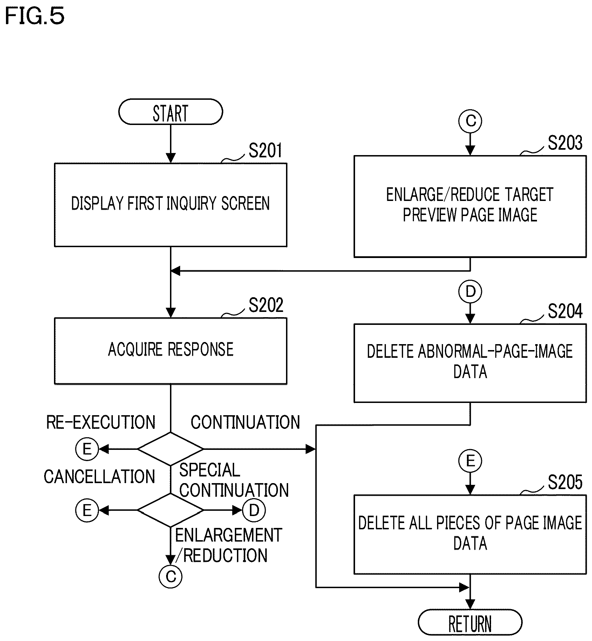

In step S105, the job control portion 5a executes a first inquiry process described below (see FIG. 5).

In the first inquiry process, the job control portion 5a reports information about the sensed abnormality and inquires what process is to be performed after the consecutive image acquisition process is suspended.

The job control portion 5a executes the process of step S106 after executing the process of step S105.

### <Step S106>

In step S106, the job control portion 5a selects the next process depending on whether a response acquired through the first inquiry process of step S105 is the instruction for the cancellation of the consecutive reading job or an instruction other than the instruction for the cancellation.

In a case where the response acquired through the first inquiry process is the instruction for the cancellation of the consecutive reading job, the job control portion 5a brings the first job control to an end. The consecutive reading job is hereby called off.

In contrast, in a case where the response acquired through the first inquiry process is not the instruction for the cancellation of the consecutive reading job, the job control portion 5a executes the process of step S107.

### <Step S107>

In step S107, the job control portion 5a selects the next process depending on whether or not the consecutive image acquisition process on all the document sheets 91 in the consecutive reading job comes to an end.

In a case where the consecutive image acquisition process does not come to an end, the job control portion 5a executes the processes of step S101 and the subsequent steps. This executes the processes of step S101 and the subsequent steps on the next document sheet 91.

In contrast, in a case where the consecutive image acquisition process comes to an end, the job control portion 5a executes the process of step S108.

### <Step S108>

In step S108, the job control portion 5a causes the image processing apparatus 10 to execute the data output process in the consecutive reading job. The data output process is the data preservation process in the image preservation job, the image data transmission process in the image transmission job, or the print process in the copy job.

The job control portion 5a brings the first job control to an end after executing the process of step S108.

### [First Inquiry Process]

Next, examples of procedures of the first inquiry process will be described with reference to the flowchart shown in FIG. 5.

In the following description, S201, S202, ... represent the identification signs of a plurality of steps in the first inquiry process. In the first inquiry process, the process of step S201 is first executed.

### <Step S201>

In step S201, the job control portion 5a causes the display device 3b to display a first inquiry screen G1 (see FIG. 8).

The first inquiry screen G1 includes the information about the sensed abnormality and inquiry information for inquiring one instruction of a plurality of candidates including at least the continuation of the consecutive reading job and the cancellation of the consecutive reading job.

In the example shown in FIG. 8, the first inquiry screen G1 includes a target preview page image V1, abnormality-sensed page information V2, and abnormality type information V3. The target preview page image V1, the abnormality-sensed page information V2, and the abnormality type information V3 are respective examples of the information about the sensed abnormality.

The target preview page image V1 indicates an image read from the abnormality-sensed document sheet. The abnormality-sensed page information V2 indicates the page number of the abnormality-sensed document sheet. The abnormality type information V3 indicates the type of the sensed abnormality.

The first inquiry screen G1 further includes enlargement and reduction instruction icons P1. The enlargement and reduction instruction icons P1 are operation icons that receive an instruction for the enlarged display or the reduced display of the target preview page image V1.

The first inquiry screen G1 further includes a continuation instruction icon Q1, a special continuation instruction icon Q2, a re-execution instruction icon Q3, and a cancellation instruction icon Q4.

The continuation instruction icon Q1 is an operation icon that receives an operation for the instruction for the continuation of the consecutive reading job. The special continuation instruction icon Q2 is an operation icon that receives an operation for the instruction for the special continuation of the consecutive reading job. The special continuation in the first job control is to execute the process of conveying the abnormality-sensed document sheet and the subsequent processes.

That is, the difference between the continuation of the consecutive reading job and the special continuation of the consecutive reading job is the difference as to whether or not the re-execution of the page image acquisition process on the abnormality-sensed document sheet is included. The special continuation of the consecutive reading job includes the re-execution of the page image acquisition process on the abnormality-sensed document sheet.

The re-execution instruction icon Q3 is an operation icon that receives an operation for the instruction for re-execution of executing the consecutive image acquisition process on all the document sheets 91 in the consecutive reading job again from the start. The cancellation instruction icon Q4 is an operation icon that receives an operation for the instruction for the cancellation of the consecutive reading job.

The continuation instruction icon Q1, the special continuation instruction icon Q2, the re-execution instruction icon Q3, and the cancellation instruction icon Q4 included in the first inquiry screen G1 are examples of first inquiry information for inquiring one instruction of a plurality of candidates for a subsequent process for the suspended consecutive reading job.

The continuation, the special continuation, the re-execution, and the cancellation of the consecutive reading job are examples of a plurality of candidates for a subsequent process for the suspended consecutive reading job.

The job control portion 5a executes the process of step S202 after executing the process of step S201.

### <Step S202>

In step S202, the job control portion 5a acquires a response to information in the first inquiry screen G1. The response is input through the operation device 3a. Furthermore, the job control portion 5a selects the next process depending on the instruction of the acquired response.

Specifically, the job control portion 5a executes the process of step S203 in a case where the instruction of the response is the instruction for the enlarged display or the reduced display.

In addition, the job control portion 5a brings the first inquiry process to an end in a case where the instruction of the response is the instruction for the continuation.

In a case where the instruction of the response is the instruction for the continuation, the remaining processes of the consecutive image acquisition process of the consecutive reading job on the next document sheet 91 of the abnormality-sensed document sheet and the subsequent document sheets are continued and the data output process is further executed (see steps S101 to S108). In this case, all the pieces of page image data already acquired before the abnormality is sensed are kept for the data output process.

In a case where the instruction of the response is the instruction for the special continuation, the job control portion 5a executes the process of step S204.

In addition, the job control portion 5a executes the process of step S204 in a case where the instruction of the response is the instruction for the re-execution or the instruction for the cancellation.

### <Step S203>

In step S203, the job control portion 5a causes the display device 3b to enlarge and display or reduce and display the target preview page image V1 in accordance with the instruction for the enlarged display or the reduced display.

The job control portion 5a executes the processes of step S202 and the subsequent steps after executing the process of step S203.

### <Step S204>

In step S204, the job control portion 5a deletes the data corresponding to the abnormality-sensed document sheet among the one or more pieces of page image data already acquired through the processes of steps S101 to S102.

The job control portion 5a brings the first inquiry process to an end after executing the process of step S204.

In a case where the process of step S204 is executed, the processes of the consecutive image acquisition process of the consecutive reading job on the document sheets subsequent to the abnormality-sensed document sheet are executed and the data output process is further executed (see steps S101 to S108). In this case, the remaining pieces of data other than the data corresponding to the abnormality-sensed document sheet among all the pieces of page image data already acquired before the abnormality is sensed are kept for the data output process.

### <Step S205>

In step S205, the job control portion 5a deletes all the pieces of page image data already acquired before the abnormality is sensed. All the pieces of page image data already acquired before the abnormality is sensed are hereby discarded.

The job control portion 5a brings the first inquiry process to an end after executing the process of step S205.

In a case where the instruction of the response is the instruction for the re-execution and the process of step S205 is hereby executed, the consecutive reading job is started over again (see steps S101 to S108).

Meanwhile, in a case where the instruction of the response is the instruction for the cancellation and the process of step S205 is hereby executed, the consecutive reading job is called off (see step S106).

### [Second Job Control]

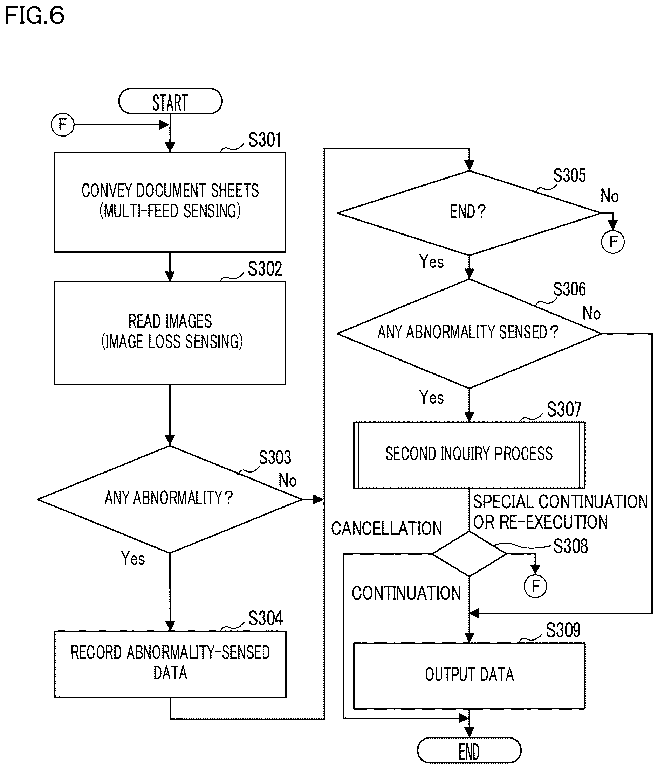

Next, examples of procedures of the second job control will be described with reference to the flowchart shown in FIG. 6.

In the following description, S301, S302, ... represent the identification signs of a plurality of steps in the second job control. In the second job control, the process of step S301 is first executed.

### <Step S301>

In step S301, the job control portion 5a causes the document sheet conveying device 15 to execute document sheet conveyance as in step S101. In step S301, the document sheets 91 are conveyed along the conveyance path 150 and the multi-feed sensing portion 5b executes the multi-feed sensing process on the basis of sense signals of the ultrasonic sensor 17.

The job control portion 5a executes the process of step S302 in parallel with the process of step S301.

### <Step S302>

In step S302, the job control portion 5a causes the image sensor unit 11 to execute the image reading process as in step S102. In step S302, the pieces of page image data for the conveyed document sheets 91 are acquired and the image loss sensing portion 5c executes the image loss sensing process on each of the pieces of page image data.

That is, in steps S301 and S302, the job control portion 5a causes the image reading apparatus 1 to execute the page image acquisition process of the consecutive image acquisition process corresponding to the one document sheet 91.

The job control portion 5a executes the process of step S303 after executing the processes of steps S301 to S302.

### <Step S303>

In step S303, the job control portion 5a selects the next process depending on whether or not the abnormality is sensed through the multi-feed sensing process and the image loss sensing process. The process of step S303 is the same as the process of step S103.

The job control portion 5a executes the process of step S304 in a case where the abnormality is sensed. The job control portion 5a executes the process of step S305 in a case where the abnormality is not sensed.

### <Step S304>

In step S304, the job control portion 5a records abnormality-sensed data including the information about the sensed abnormality in the secondary storage apparatus 6. The job control portion 5a executes the process of step S304 when the page image acquisition process on the abnormality-sensed document sheet comes to an end.

The job control portion 5a executes the process of step S305 after executing the process of step S304.

### <Step S305>

In step S305, the job control portion 5a selects the next process depending on whether or not the consecutive image acquisition process on all the document sheets 91 in the consecutive reading job comes to an end.

In a case where the consecutive image acquisition process does not come to an end, the job control portion 5a executes the processes of step S301 and the subsequent steps. This executes the processes of step S301 and the subsequent steps on the next document sheet 91.

In contrast, in a case where the consecutive image acquisition process comes to an end, the job control portion 5a executes the process of step S306.

### <Step S306>

In step S306, the job control portion 5a selects the next process depending on whether or not the abnormality is sensed in one or more of the plurality of document sheets 91.

The job control portion 5a executes the process of step S307 in a case where the abnormality is sensed in one or more of the plurality of document sheets 91. In contrast, the job control portion 5a executes the process of step S309 in a case where the abnormality is not sensed in any of the plurality of document sheets 91.

### <Step S307>

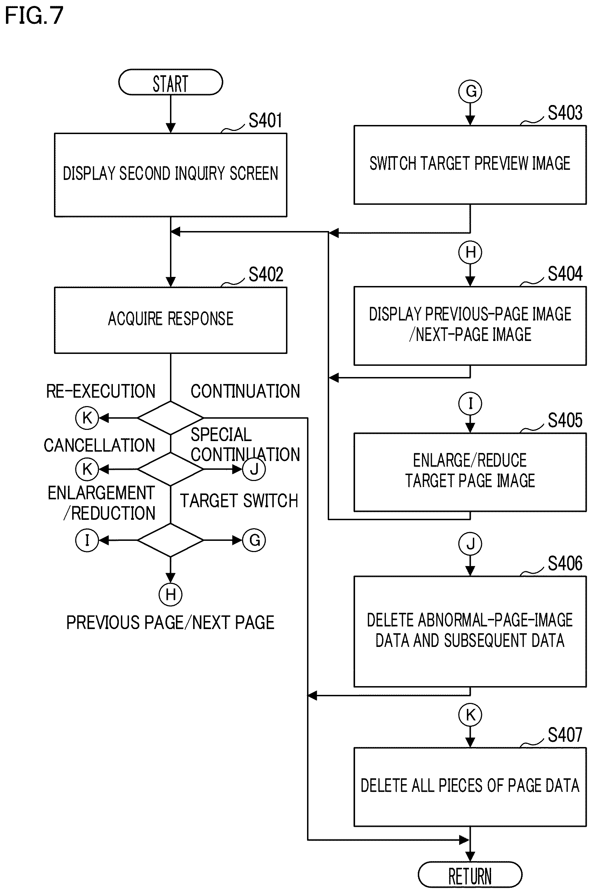

In step S307, the job control portion 5a executes a second inquiry process described below (see FIG. 7).

In the second inquiry process, the job control portion 5a reports information about the sensed abnormality and inquires what process is to be performed after the consecutive image acquisition process comes to an end.

The job control portion 5a executes the process of step S308 after executing the process of step S307.

### <Step S308>

In step S308, the job control portion 5a selects the next process depending on a response acquired through the second inquiry process of step S307.

In a case where the response acquired through the second inquiry process is the instruction for the special continuation or the re-execution of the consecutive reading job, the job control portion 5a executes the processes of step S301 and the subsequent steps.

Additionally, in a case where the processes of step S301 and the subsequent steps are executed after the process of step S308 is executed, the job control portion 5a selects the next process in step S306 on the assumption that the abnormality is not sensed.

In a case where the response acquired through the second inquiry process is the instruction for the continuation of the consecutive reading job, the job control portion 5a executes the process of step S309.

In a case where the response acquired through the second inquiry process is the instruction for the cancellation of the consecutive reading job, the job control portion 5a brings the second job control to an end. The consecutive reading job is hereby called off.

In contrast, in a case where the response acquired through the second inquiry process is not the instruction for the cancellation of the consecutive reading job, the job control portion 5a executes the process of step S309.

### <Step S309>

In step S309, the job control portion 5a causes the image processing apparatus 10 to execute the data output process in the consecutive reading job. The process of step S309 is the same as the process of step S108.

The job control portion 5a brings the second job control to an end after executing the process of step S309.

### [Second Inquiry Process]

Next, examples of procedures of the second inquiry process will be described with reference to the flowchart shown in FIG. 7.

In the following description, S401, S402, ... represent the identification signs of a plurality of steps in the second inquiry process. In the second inquiry process, the process of step S401 is first executed.

### <Step S401>

In step S401, the job control portion 5a causes the display device 3b to display a second inquiry screen G2 (see FIG. 9).

The second inquiry screen G2 includes the information about the sensed abnormality and includes inquiry information for inquiring one instruction of a plurality of candidates including at least the continuation of the consecutive reading job and the cancellation of the consecutive reading job.

In the example shown in FIG. 9, the second inquiry screen G2 includes the target preview page image V1, the abnormality-sensed page information V2, and the abnormality type information V3. The target preview page image V1, the abnormality-sensed page information V2, and the abnormality type information V3 are respective examples of the information about the sensed abnormality.

Even in a case where the abnormalities are sensed in some of the plurality of document sheets 91, the job control portion 5a causes the display device 3b to display the one target preview page image V1. The target preview page image V1 is one of a plurality of preview page images indicating images read from all the plurality of abnormality-sensed document sheets in which the abnormalities are sensed among the plurality of page images.

For example, when the second inquiry screen G2 is displayed by the display device 3b, the job control portion 5a includes, in the second inquiry screen G2, the target preview page image V1 for one of the plurality of document sheets 91 in which the abnormality is first sensed.

In the second inquiry screen G2, the abnormality-sensed page information V2 and the abnormality type information V3 are pieces of information regarding the abnormality-sensed document sheet corresponding to the target preview page image V1 displayed by the display device 3b.

The second inquiry screen G2 includes the enlargement and reduction instruction icons P1 as with the first inquiry screen G1.

Furthermore, the second inquiry screen G2 includes target switch icons P2 and adjacent page display icons P3.

The target switch icons P2 are operation icons that receive an operation for a target switch instruction to designate the target preview page image V1 to be displayed by the display device 3b among the plurality of preview page images.

The adjacent page display icons P3 are operation icons that receive an operation for a previous-page display instruction or a next-page display instruction. The previous-page display instruction is an instruction to cause the display device 3b to display an image on the previous page of the target preview page image V1 among the plurality of page images. The next-page display instruction is an instruction to cause the display device 3b to display an image on the next page of the target preview page image V1 among the plurality of page images.

Furthermore, as with the first inquiry screen G1, the second inquiry screen G2 includes the continuation instruction icon Q1, the special continuation instruction icon Q2, the re-execution instruction icon Q3, and the cancellation instruction icon Q4.

The continuation instruction icon Q1, the special continuation instruction icon Q2, the re-execution instruction icon Q3, and the cancellation instruction icon Q4 included in the second inquiry screen G2 are examples of second inquiry information for inquiring one instruction of a plurality of candidates for a process subsequent to the end of the consecutive image acquisition process in the consecutive reading job.

The continuation, the special continuation, the re-execution, and the cancellation of the consecutive reading job are examples of a plurality of candidates for a subsequent process for the suspended consecutive reading job.

The job control portion 5a executes the process of step S402 after executing the process of step S401.

### <Step S402>

In step S402, the job control portion 5a acquires a response to information in the second inquiry screen G2. The response is input through the operation device 3a. Furthermore, the job control portion 5a selects the next process depending on the instruction of the acquired response.

Specifically, the job control portion 5a executes the process of step S403 in a case where the instruction of the response is the target switch instruction.

In addition, the job control portion 5a executes the process of step S404 in a case where the instruction of the response is the previous-page display instruction or the next-page display instruction.

In addition, the job control portion 5a executes the process of step S405 in a case where the instruction of the response is the instruction for the enlarged display or the reduced display.

In addition, the job control portion 5a brings the second inquiry process to an end in a case where the instruction of the response is the instruction for the continuation.

In a case where the instruction of the response is the instruction for the continuation, the data output process based on the plurality of pieces of page image data already acquired through the consecutive image acquisition process is executed (see step S309).

In a case where the instruction of the response is the instruction for the special continuation, the job control portion 5a executes the process of step S406.

In addition, the job control portion 5a executes the process of step S407 in a case where the instruction of the response is the instruction for the re-execution or the instruction for the cancellation.

### <Step S403>

In step S403, the job control portion 5a switches the target preview page image V1 to be displayed by the display device 3b to the new target preview page image identified by the target switch instruction among the plurality of preview page images in accordance with the target switch instruction input through the operation device 3a.

The job control portion 5a executes the processes of step S402 and the subsequent steps after executing the process of step S403.

### <Step S404>

In step S404, the job control portion 5a causes the display device 3b to display an image on the next page or the previous page of the target preview page image V1 among the plurality of page images in accordance with the previous-page display instruction or the next-page display instruction input through the operation device 3a.

In this embodiment, the job control portion 5a causes the display device 3b to display the image on the next page or the previous page of the target preview page image V1 instead of the target preview page image V1.

The job control portion 5a executes the processes of step S402 and the subsequent steps after executing the process of step S404.

### <Step S405>

In step S405, the job control portion 5a causes the display device 3b to enlarge and display or reduce and display the target preview page image V1 in accordance with the instruction for the enlarged display or the reduced display.

Additionally, in a case where the image on the next page or the previous page of the target preview page image V1 is displayed by the display device 3b, the job control portion 5a causes the image already displayed to be enlarged and displayed or reduced and displayed.

The job control portion 5a executes the processes of step S402 and the subsequent steps after executing the process of step S405.

### <Step S406>

In step S406, the job control portion 5a deletes the abnormal-page-image data and the subsequent data among the plurality of pieces of page image data already acquired through the processes of steps S301 to S305. The abnormal-page-image data is the data corresponding to the abnormality-sensed document sheet.

In step S406, the job control portion 5a deletes, among the plurality of pieces of page image data, the pieces of data of the page corresponding to the target preview page image V1 and the subsequent pages. The target preview page image V1 is displayed by the display device 3b when the instruction for the special continuation is input.

The job control portion 5a brings the second inquiry process to an end after executing the process of step S406.

In a case where the process of step S406 is executed, the processes of the consecutive image acquisition process of the consecutive reading job on the document sheets subsequent to the specific abnormality-sensed document sheet are executed and the data output process is further executed (see steps S301 to S309). In this case, the remaining pieces of data other than the data deleted in step S406 among all the pieces of page image data already acquired before the abnormality is sensed are kept for the data output process.

### <Step S407>

In step S407, the job control portion 5a deletes all the pieces of page image data already acquired through the consecutive image acquisition process. All the pieces of page image data already acquired through the consecutive image acquisition process are hereby discarded.

The job control portion 5a brings the second inquiry process to an end after executing the process of step S407.

In a case where the instruction of the response is the instruction for the re-execution and the process of step S407 is hereby executed, the consecutive reading job is started over again (see steps S301 to S309).

Meanwhile, in a case where the instruction of the response is the instruction for the cancellation and the process of step S407 is hereby executed, the consecutive reading job is called off (see step S308).

The mode selection process, the first job control, and the second job control are an example of an image processing apparatus control method for controlling the image processing apparatus 10. The control apparatus 5 including the job control portion 5a is an example of an apparatus that achieves the image processing apparatus control method.

As shown above, the job control portion 5a causes the image processing apparatus to execute the consecutive reading job including the consecutive image acquisition process and the data output process subsequent to the consecutive image acquisition process in response to a request to execute the job (see FIGS. 4 and 6).

Furthermore, the job control portion 5a executes the first job control with the first operation mode selected (see FIG. 4).

When the first job control is in execution, a first abnormal state in which the abnormality is sensed in the middle of the execution of the consecutive image acquisition process of the consecutive reading job occurs in some cases (see steps S101 to S103).

The job control portion 5a executes the processes of step S104 and the subsequent steps when the first abnormal state occurs (see FIG. 4). The processes of step S104 and the subsequent steps are an example of first control.

In the processes of step S104 and the subsequent steps, the job control portion 5a causes the image processing apparatus 10 to suspend the consecutive image acquisition process (see step S104).

In the processes of step S104 and the subsequent steps, the job control portion 5a causes the display device 3b to display the first inquiry screen G1. The first inquiry screen G1 includes the information about the abnormality and the first inquiry information for inquiring one instruction of the plurality of candidates (see FIG. 8).

In this embodiment, the first inquiry information is information for inquiring one instruction of the four candidates including the special continuation, the re-execution, the continuation, and the cancellation of the consecutive reading job (see FIG. 8). It is noted that some of the four candidates may be omitted.

Furthermore, the job control portion 5a acquires a response to the first inquiry information (step S202). The response is input through the operation device 3a. Furthermore, the job control portion 5a causes the image processing apparatus 10 to execute a process compliant with the instruction of the acquired response (see steps S203 to S205 and steps S101 to S108 after the process of step S104 is executed). The response acquired through step S202 is an example of a first response.

Meanwhile, the job control portion 5a executes the second job control with the second operation mode selected (see FIG. 6).

When the second job control is in execution, a second abnormal state in which the abnormality is sensed in the middle of the execution of the consecutive image acquisition process of the consecutive reading job occurs in some cases (see steps S301 to S303).

The job control portion 5a executes the processes of step S304 and the subsequent steps when the second abnormal state occurs (see FIG. 6). The processes of step S304 and the subsequent steps are an example of second control.

In the processes of step S304 and the subsequent steps, the job control portion 5a causes the image processing apparatus 10 to continue the consecutive image acquisition process of the consecutive reading job to the end (see step S305).

In the processes of step S304 and the subsequent steps, the job control portion 5a causes the display device 3b to display the second inquiry screen G2 when the consecutive image acquisition process of the consecutive reading job comes to an end. The second inquiry screen G2 includes the information about the abnormality and the second inquiry information for inquiring one instruction of the plurality of candidates (see FIG. 9).

In this embodiment, the second inquiry information is information for inquiring one instruction of the four candidates including the special continuation, the re-execution, the continuation, and the cancellation of the consecutive reading job (see FIG. 9). It is noted that some of the four candidates may be omitted.

Furthermore, the job control portion 5a acquires a response to the second inquiry information (see step S402). The response is input through the operation device 3a. Furthermore, the job control portion 5a causes the image processing apparatus 10 to execute a process compliant with the instruction of the acquired response (see steps S403 to S407 and steps S301 to S309 after the process of step S307 is executed). The response acquired through step S402 is an example of a second response.

In the image processing apparatus 10, the mode selection process and the first job control or the second job control corresponding to the selected operation mode are executed. This makes it possible to designate, depending on the intention of a user, a process to be executed in a case where the abnormality is sensed in the middle of the execution of the consecutive reading job.

The first job control or the second job control is executed to make it possible to check, in a case where the abnormality is sensed in the one document sheet 91 in the middle of the execution of the consecutive reading job, the contents of the target preview page image V1 for the abnormality-sensed document sheet and designate a method for the remaining processes that correspond to the intention of the user.

In the second job control, in a case where the second abnormal state occurs, the job control portion 5a causes the display device 3b to display the second inquiry screen G2 before the data output process is executed after the consecutive image acquisition process in the consecutive reading job comes to an end (see steps S307 and S401, and FIG. 9).

The second inquiry screen G2 includes the one preview page image or at least some of the plurality of preview page images. In this embodiment, the second inquiry screen G2 includes the target preview page image V1 for one page corresponding to some of the plurality of preview page images (see FIG. 9).

In addition, in the second inquiry process, the job control portion 5a executes the process of step S403 in accordance with the target switch instruction input through the operation device 3a. In step S403, the job control portion 5a switches the target preview page image V1 to be displayed by the display device 3b to the new target preview page image V1 identified by the target switch instruction among the plurality of preview page images.

Furthermore, in the second inquiry process, the job control portion 5a executes the process of step S404 in accordance with a previous-page display instruction or a next-page display instruction input through the operation device 3a. In step S404, the job control portion 5a causes the display device 3b to display an image on the next page or the previous page of the target preview page image V1 among the plurality of page images.

The second job control is executed to make it possible to check, even in a case where the abnormalities are sensed in the plurality of document sheets 91 in the middle of the execution of the consecutive reading job, the contents of the target preview page image V1 corresponding to each of the plurality of abnormality-sensed document sheets and designate a method for the remaining processes that correspond to the intention of the user.

In this embodiment, the job control portion 5a causes the display device 3b of the image processing apparatus 10 to display various kinds of information in the first inquiry process and the second inquiry process. Similarly, the job control portion 5a acquires various kinds of information input through the operation device 3a of the image processing apparatus 10 in the first inquiry process and the second inquiry process.

In this embodiment, the image processing apparatus 10 is an example of a specific apparatus that displays information and receives information in the first inquiry process and the second inquiry process.

It is noted that the job control portion 5a may cause the display device 8b of the host apparatus 8 to display various kinds of information in the first inquiry process and the second inquiry process. Similarly, the job control portion 5a may acquire various kinds of information input through the operation device 8a of the host apparatus 8 in the first inquiry process and the second inquiry process. In this case, the host apparatus 8 is an example of the specific apparatus communicable with the image processing apparatus 10.

### [Second Embodiment]

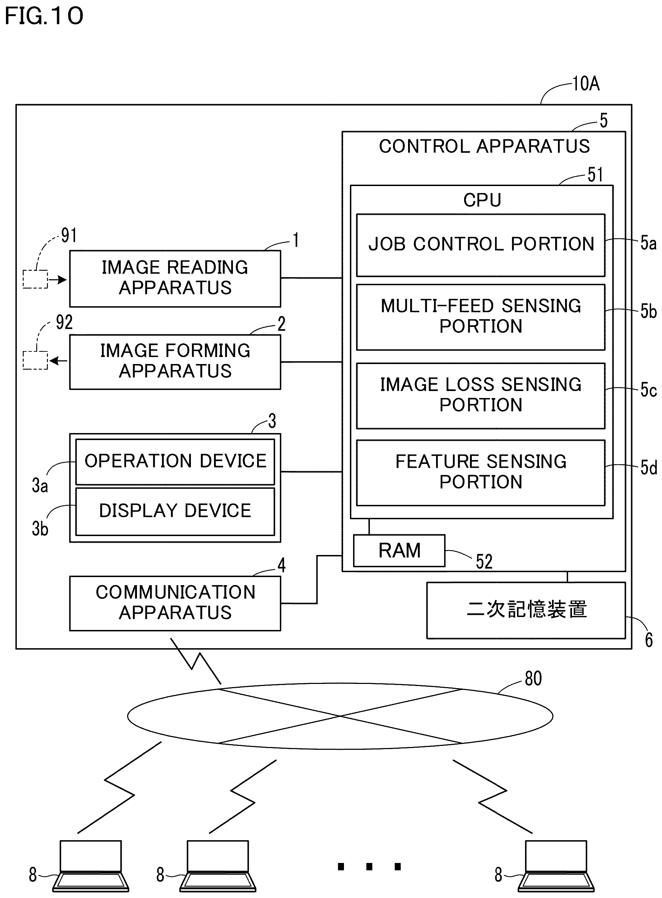

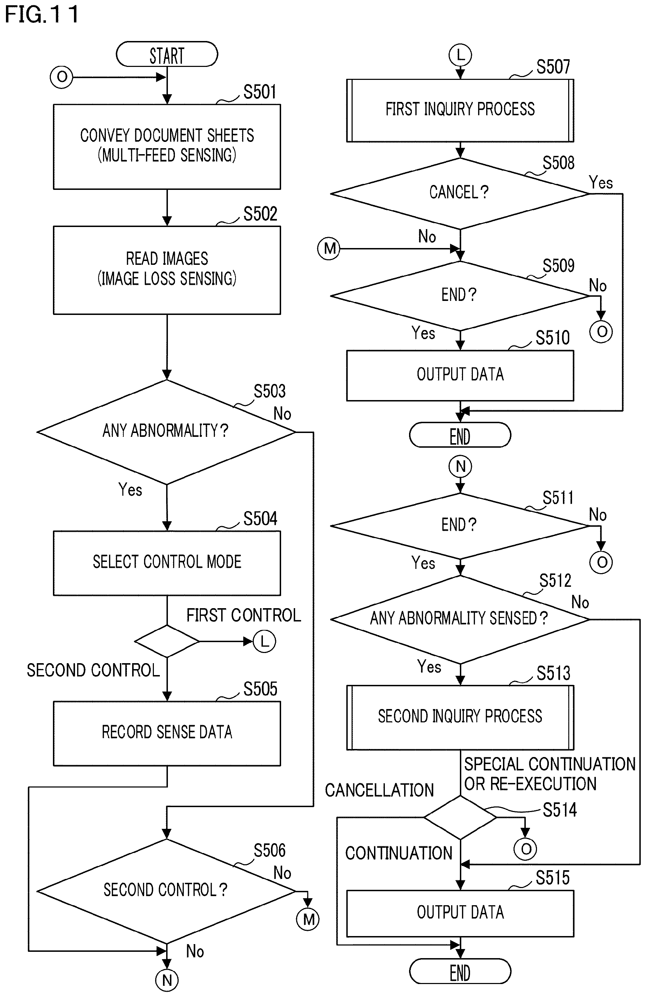

Next, an image processing apparatus 10A according to a second embodiment will be described with reference to FIGS. 10 and 11. In FIG. 10, the components that are the same as the components shown in FIG. 1 are denoted with the same reference signs.

Hereinafter, a difference of the image processing apparatus 10A from the image processing apparatus 10 will be described.

The image processing apparatus 10A has a configuration in which a feature sensing portion 5d is added to the image processing apparatus 10. The feature sensing portion 5d is one of the plurality of processing modules in the CPU 51.

The feature sensing portion 5d senses the size of each of the document sheets 91 on the basis of the readout image for the document sheet 91. For example, the feature sensing portion 5d senses the four sides of the readout image for each of the document sheets 91 through an edge detection process on the readout image and senses the size of each of the document sheets 91 on the basis of the sensing positions of the four sides.

It is noted that the feature sensing portion 5d may sense the length of each of the document sheets 91 on the basis of a sense signal of the document sheet sensor 16. The length of each of the document sheets 91 is an example of the size of each of the document sheets 91.

Furthermore, the feature sensing portion 5d senses a feature image that is included in the readout image for each of the document sheets 91 and defined in advance. For example, the feature image is an image of a color defined in advance, an image of a mark defined in advance, an image of a title character string defined in advance, or the like.

For example, the feature sensing portion 5d senses the feature image using artificial intelligence algorithm for image recognition that is learned in advance using a plurality of pieces of sample image data.

In this embodiment, the job control portion 5a selects one of three candidate modes including the first operation mode, the second operation mode, and a third operation mode in accordance with a selection input made through the operation device 3a in the mode selection process.

The job control portion 5a executes the third job control in response to the request to execute the job with the third operation mode selected.

### [Third Job Control]

Next, examples of procedures of the third job control will be described with reference to the flowchart shown in FIG. 11.

In the following description, S501, S502, ... represent the identification signs of a plurality of steps in the third job control. In the third job control, the process of step S501 is first executed.

### <Step S501>

In step S501, the job control portion 5a causes the document sheet conveying device 15 to execute document sheet conveyance as in step S101. In step S501, the document sheets 91 are conveyed along the conveyance path 150 and the multi-feed sensing portion 5b executes the multi-feed sensing process on the basis of sense signals of the ultrasonic sensor 17.

The job control portion 5a executes the process of step S502 in parallel with the process of step S501.

### <Step S502>

In step S502, the job control portion 5a causes the image sensor unit 11 to execute the image reading process as in step S102. In step S502, the pieces of page image data for the conveyed document sheets 91 are acquired and the image loss sensing portion 5c executes the image loss sensing process on each of the pieces of page image data.

Furthermore, in step S502, the process of sensing the size of the document sheet 91 and the process of sensing the feature image by the feature sensing portion 5d are executed.

The job control portion 5a executes the process of step S503 after executing the processes of steps S501 to S502.

### <Step S503>

In step S503, the job control portion 5a selects the next process depending on whether or not the abnormality is sensed through the multi-feed sensing process and the image loss sensing process.

The job control portion 5a executes the process of step S504 in a case where the abnormality is sensed. The job control portion 5a executes the process of step S506 in a case where the abnormality is not sensed.

### <Step S504>

In step S504, the job control portion 5a selects one of the first control and the second control in accordance with an automatic selection rule defined in advance. Furthermore, the job control portion 5a selects the next process depending on the selected control.

In this embodiment, the job control portion 5a selects one of the first control and the second control in accordance with a size selection rule and an image selection rule each set in advance.

The size selection rule is an automatic selection rule indicating the relationship between the size of the abnormality-sensed document sheet in which the abnormality is sensed and the control. The image selection rule is an automatic selection rule indicating the relationship between the feature image included in the readout image of the abnormality-sensed document sheet in which the abnormality is sensed and the control.

The automatic selection rules are registered in the image processing apparatus 10 in advance.

In this embodiment, the size of the abnormality-sensed document sheet and the feature image included in the readout image of the abnormality-sensed document sheet are sensed by the feature sensing portion 5d.

The job control portion 5a executes the processes of steps S507 to S510 in a case where the first control is selected. Meanwhile, the job control portion 5a executes the processes of step S505 and steps S511 to S515 in a case where the second control is selected.

### <Step S506>

In step S506, the job control portion 5a selects the next process depending on whether or not the second control has already been selected.

The job control portion 5a executes the process of step S509 in a case where the second control is not selected.

### <Steps S507 to S510>

The processes of steps S507 to S510 are the same as the processes of steps S105 to S108 in the first job control.

That is, step S507 corresponds to step S105, step S508 corresponds to step S106, step S509 corresponds to step S107, and step S510 corresponds to step S108.

### <Step S505 and Steps S511 to S515>

The processes of step S505 and steps S511 to S515 are the same as the processes of steps S304 to S309 in the second job control.

That is, step S505 corresponds to step S304, step S511 corresponds to step S305, step S512 corresponds to step S306, step S513 corresponds to step S307, step S514 corresponds to step S308, and step S515 corresponds to step S309.

In the third job control, a third abnormal state in which the abnormality is sensed in the middle of the execution of the consecutive image acquisition process of the consecutive reading job with the third operation mode selected occurs in some cases (see step S503).

When the third abnormal state occurs, the job control portion 5a selects one of the first control and the second control in accordance with the automatic selection rule and executes the selected control (see step S504).

The abnormality tends to be easily sensed or the abnormality tends not to be easily sensed in the document sheet 91 having a specific size or the document sheet 91 including the specific feature image in some cases. In a case where the image processing apparatus 10A is adopted, the automatic selection of control corresponding to the easiness of sensing the abnormality or the difficulty in sensing the abnormality is possible.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An image processing apparatus control method for controlling an image processing apparatus (10), the image processing apparatus control method comprising:
in a case where the image processing apparatus (10) includes
a document sheet conveying device (15) configured to execute a consecutive conveyance process of sequentially conveying a plurality of document sheets along a conveyance path,
an image sensor unit (11) configured to execute a consecutive reading process of sequentially reading images on the plurality of respective document sheets conveyed through the consecutive conveyance process,
an abnormality sensing device (5c, 17) configured to sense an abnormality in one or both of document sheet conveyance and a readout image read from each of the plurality of document sheets whenever the plurality of document sheets is each conveyed, and
a data processing apparatus (51) configured to execute a data output process based on a plurality of pieces of page image data indicating the respective readout images acquired through the consecutive conveyance process and the consecutive reading process,
selecting, by a control apparatus (5), one of a plurality of candidate modes in accordance with a selection input made through an information input device (3a) included in a specific apparatus that is the image processing apparatus (10) or a host apparatus (8) communicable with the image processing apparatus (10), the plurality of candidate modes including a first operation mode and a second operation mode;
causing, by the control apparatus (5), the image processing apparatus (10) to execute a consecutive reading job in response to a request to execute a job, the consecutive reading job including a consecutive image acquisition process and the data output process subsequent to the consecutive image acquisition process, the consecutive image acquisition process including the consecutive conveyance process and the consecutive reading process;
executing, by the control apparatus (5), first control when a first abnormal state in which the abnormality is sensed in a middle of execution of the consecutive image acquisition process of the consecutive reading job with the first operation mode selected occurs; and
executing, by the control apparatus (5), second control when a second abnormal state in which the abnormality is sensed in a middle of execution of the consecutive image acquisition process of the consecutive reading job with the second operation mode selected occurs, wherein
the first control includes
causing, by the control apparatus (5), the image processing apparatus (10) to suspend the consecutive image acquisition process,
causing, by the control apparatus (5), a display device (3b) included in the specific apparatus to display information about the abnormality and first inquiry information for inquiring one instruction of a plurality of candidates including continuation of the consecutive reading job and cancellation of the consecutive reading job, and
causing, by the control apparatus (5), the image processing apparatus (10) to execute a process compliant with an instruction of a first response to the first inquiry information, the first response being input through the information input device (3a), and
the second control includes
causing, by the control apparatus (5), the image processing apparatus (10) to continue the consecutive image acquisition process of the consecutive reading job to an end,
causing, by the control apparatus (5), the display device (3b) to display the information about the abnormality and second inquiry information when the consecutive image acquisition process of the consecutive reading job comes to an end, the second inquiry information being for inquiring one instruction of the plurality of candidates including the continuation of the consecutive reading job and the cancellation of the consecutive reading job, and
causing, by the control apparatus (5), the image processing apparatus (10) to execute a process compliant with an instruction of a second response to the second inquiry information, the second response being input through the information input device (3a).

2. The image processing apparatus control method according to claim 1, wherein the first inquiry information and the second inquiry information are pieces of information each for inquiring one instruction of three or more candidates including one or both of special continuation and re-execution of the consecutive reading job, the continuation of the consecutive reading job, and the cancellation of the consecutive reading job, the special continuation being to execute a process of conveying an abnormality-sensed document sheet in which the abnormality is sensed and a subsequent process in the consecutive reading job.

3. The image processing apparatus control method according to claim 1 or 2, comprising:
selecting, by the control apparatus (5), one of the plurality of candidate modes in accordance with a selection input made through the information input device (3a), the plurality of candidate modes including the first operation mode, the second operation mode, and a third operation mode; and
selecting, by the control apparatus (5), one of the first control and the second control in accordance with an automatic selection rule and executing, by the control apparatus (5), the selected control when a third abnormal state in which the abnormality is sensed in a middle of execution of the consecutive image acquisition process of the consecutive reading job with the third operation mode selected occurs, wherein
the automatic selection rule includes one or both of
an image selection rule indicating a relationship between a feature image and the control, the feature image being included in a readout image for an abnormality-sensed document sheet in which the abnormality is sensed, and
a size selection rule indicating a relationship between a size of the abnormality-sensed document sheet and the control.

4. An image processing apparatus (10) comprising:
a document sheet conveying device (15) configured to execute a consecutive conveyance process of sequentially conveying a plurality of document sheets along a conveyance path;
an image sensor unit (11) configured to execute a consecutive reading process of sequentially reading images on the plurality of respective document sheets conveyed through the consecutive conveyance process;
an abnormality sensing device (5c, 17) configured to sense an abnormality in one or both of document sheet conveyance and a readout image whenever the plurality of document sheets is each conveyed;
a data processing apparatus (51) configured to execute a data output process based on a plurality of pieces of page image data indicating the respective readout images acquired through the consecutive conveyance process and the consecutive reading process; and
a control apparatus (5) configured to achieve the image processing apparatus control method according to any one of claims 1 to 3.

5. The image processing apparatus (10) according to claim 4, wherein the abnormality sensing device (5c, 17) includes one or both of a multi-feed sensing device (17) and an image loss sensing device (5c), the multi-feed sensing device (17) being configured to sense a multi-feed abnormality that two or more document sheets are conveyed in an overlapped state, the image loss sensing device (5c) being configured to sense an image loss abnormality that an image loss region is included in the readout image.
